# EUROPÄISCHE PATENTSCHRIFT

(11) **EP 0 494 091 B1**
(45) Veröffentlichungstag und Bekanntmachung des Hinweises auf die Patenterteilung: **03.07.1996**
(21) Anmeldenummer: 92104728.8
(22) Anmeldetag: 03.04.1987
(51) Int. Cl.: B29C 53/20, B29C 55/28, B29C 47/00

(54) **Vorrichtung zum Aufweiten einer Folienschlauchbahn aus thermoplastischem Kunststoff**
Apparatus for opening flattened tubes
Dispositif pour ouvrir des tubes mis à plat

(30) Priorität: 14.04.1986 DE 3612497; 16.05.1986 DE 3616666
(43) Veröffentlichungstag der Anmeldung: 08.07.1992
(62) Teilanmeldung aus: 87104994.6
(73) Patentinhaber: Windmöller & Hölscher, D-49525 Lengerich (DE)
(72) Erfinder: Upmeier, Hartmut, Dipl.-Ing., W-4540 Lengerich (DE)
(74) Vertreter: Gossel, Hans K., Dipl.-Ing.

(56) Entgegenhaltungen:
- DE-A- 2 052 150
- DE-A- 2 164 282
- US-A- 1 504 255
- US-A- 1 601 550
- US-A- 2 644 522
- US-A- 2 781 589
- US-A- 2 962 792
- US-A- 3 313 870
- US-A- 3 661 482
- US-A- 4 227 957
- US-A- 4 439 260

## Beschreibung

Die Erfindung betrifft eine Vorrichtung nach dem Oberbegriff des Patentanspruchs 1.

Aus US-A-26 44 522 ist eine Vorrichtung nach dem Oberbegriff des Patentanspruchs 1 bekannt, die allerdings dem wendelförmigen Aufschneiden eines Gewebeschlauches dient, wobei der Gewebeschlauch von einer rotierenden Abwickelstelle abgezogen wird. Bei diesem Abziehen wird der Gewebeschlauch verdrallt. Er läuft anschließend auf einen feststehenden Stützdorn auf, der mit angetriebenen Rollen zusammenwirkt, die den Schlauch zu seiner Entdrallung dienen. Die bekannte Vorrichtung ist zum Schneiden eines Folienschlauches nicht geeignet, weil beim Entdrallen dessen empfindliche Oberfläche beschädigt werden würde. Weiterhin würden durch das Verdrallen und Entdrallen Knickfalten entstehen, die bei der späteren Verarbeitung das Aussehen und die Festigkeit der Folie erheblich beeinträchtigen würden.

Ein störungsfreies Aufschneiden einer Schlauchfolienbahn zu einer Flachfolienbahn ist aber nur dann gewährleistet, wenn die Schlauchfolienbahn knitter- und faltenfrei aufgeweitet wird, so daß sich der durchlaufende, jeweils aufgeweitete Schlauchfolienbahnabschnitt verzerrungsfrei wendelförmig aufschneiden läßt.

Aufgabe der Erfindung ist es daher, eine Vorrichtung der eingangs angegebenen Art zu schaffen, mit welcher sich eine flachliegende Schlauchfolienbahn aus thermoplastischem Kunststoff knitter- und faltenfrei zylindrisch aufweiten läßt.

Erfindungsgemäß wird diese Aufgabe bei einer Vorrichtung der eingangs angegebenen Art dadurch gelöst, daß zur Aufweitung der Schlauchfolienbahn im Gestell symmetrisch zur Mittelebene des Walzenspaltes des Vorzugswalzenpaares keilförmig Stützplatten angeordnet sind, die zum Walzenspalt hin konvergieren, und daß auf der Tragplatte o.dgl. ein Blasluftrohr befestigt ist, daß die diesen einfassenden Gleitstäbe des Stützdorns vorzugsweise überragt und daß mit einem der Tragplatte angeordenten Gebläse verbunden ist. Die Blasrichtung des Blasluftrohres ist zwischen die Stützplatten gerichtet, so daß die Folienschlauchbahn bei ihrem Ablauf von den Stützplatten zylindrisch aufgeblasen wird. Der aufgeblasene Folienschlauchbahnabschnitt wird durch Vorzugseinrichtungen auf den aus den Gleitstäben o.dgl. bestehenden Stützdorn gezogen.

Zweckmäßigerweise fluchtet die Achse des Blasluftrohres mit der Drehachse der Stützplatte o.dgl.

Ausführungsbeispiele der Erfindung werden nachstehend anhand der Zeichnung näher erläutert. In dieser zeigen
- Fig. 1: eine Seitenansicht einer ersten Ausführungsform einer Vorrichtung zum wendelförmigen Aufschneiden einer Folienschlauchbahn mit vorgeschalteter Verstreckungseinrichtung in schematischer Darstellung
- Fig. 2: das kreisscheibenförmige Trennmesser der Vorrichtung nach Fig. 1 in vergrößerter Darstellung,
- Fig. 3: eine schematische Darstellung der aus einer Wendestange und einer Umlenkwalze bestehenden Führung für die von dem Trennmesser ablaufende Flachfolienbahn nach Fig. 1,
- Fig. 4: eine Draufsicht auf die Vorrichtung nach Fig. 1 in der Ebene IV-IV in Fig. 1,
- Fig. 5: eine Draufsicht auf das Trennmesser nach Fig. 1,
- Fig. 6: einen Schnitt durch einen Gleitstab,
- Fig. 7: eine der Fig. 1 entsprechende Darstellung der Vorrichtung mit auf unterschiedliche Durchmesser eingestelltem Stützdorn,
- Fig. 8: eine der Fig. 7 entsprechende Darstellung einer Ausführungsform mit zwei Wendestangen,
- Fig. 9: eine schematische Darstellung des Laufes der abgetrennten Flachfolienbahn über zwei Wendestangen in einer Vorrichtung nach Fig. 8,
- Fig. 10: eine Draufsicht auf die Vorrichtung nach Fig. 8 in vergrößerter Darstellung,
- Fig. 11: eine Draufsicht auf das Schneidmesser der Vorrichtung nach Fig. 8,
- Fig. 12: eine Seitenansicht einer dritten Ausführungsform der Vorrichtung mit horizontal liegender Drehachse der Tragplatte,
- Fig. 13: einen Schnitt durch die Drehlagerung des Stützdorns nach Fig. 12 in vergrößerter Darstellung,
- Fig. 14: eine Seitenansicht einer weiteren liegenden Ausführungsform einer Vorrichtung zum wendelförmigen Aufschneiden von Folienschlauchbahnen in schematischer Darstellung,
- Fig. 15: eine Draufsicht auf die Vorrichtung nach Fig. 14,
- Fig. 16: eine Vorderansicht der Vorrichtung nach den Fig. 14 und 15 und
- Fig. 17: eine abgewandelte Vorrichtung mit zwei Schneidmessern und zwei hintereinander angeordneten Wickelstellen mit fluchtenden Wickelachsen.

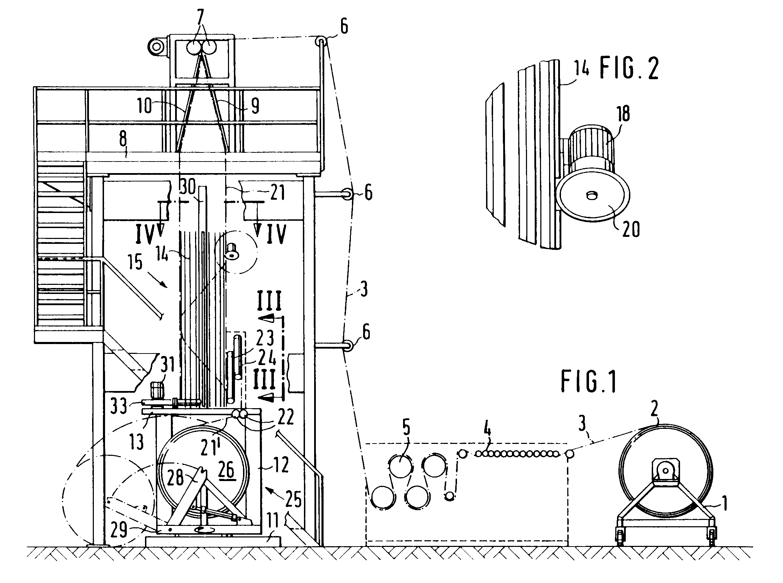

Fig. 1 zeigt eine Anlage zum Abwickeln einer Folienschlauchbahn von einer Vorratsrolle, zum Verstrecken der abgewickelten Folienschlauchbahn, zum Thermofixieren der verstreckten Folienschlauchbahn, zum zylindrischen Aufweiten der flachen Folienschlauchbahn und zum wendelförmigen Aufschneiden und Aufwickeln der durch das Aufschneiden gebildeten Flachfolienbahn.

In einem verfahrbaren Gestell 1 ist eine Vorratsrolle 2 gelagert, von der eine flache Folienschlauchbahn 3 abgezogen wird. Diese Folienschlauchbahn wird in bekannter Weise zwischen den Reckwalzen 4 einer Verstreckungseinrichtung verstreckt. Die verstreckte Folienbahn läuft anschließend über beheizte Walzen 5 und wird dadurch thermofixiert. Die verstreckte und thermofixierte Schlauchfolienbahn 3 läuft anschließend über Leitwalzen 6 durch den Klemmspalt eines Vorzugsrollenpaares 7, dessen Vorzugsrollen am oberen Ende eines gerüstartigen Gestells 8 gelagert und mit einem Drehantrieb versehen sind. In dem Gestell 8 sind keilförmig zueinander angeordnete Stützplatten 9, 10 befestigt, die zu dem Walzenspalt des Vorzugswalzenpaares 7 hin konvergieren und deren gemeinsame Mittelebene mit der durch den Walzenspalt verlaufenden Mittelebene des Vorzugswalzenpaares 7 fluchtet.

Unterhalb der Stützplatten 9, 10 ist auf einem Podest 11 ein mit einem Drehantrieb versehener Rahmen 12 drehbar gelagert, wobei die vertikale Drehachse des Rahmens 12 in der durch den Walzenspalt der Vorzugswalzen 7 verlaufenden Mittelebene liegt und das Vorzugswalzenpaar 7 mittig durchsetzt. Der Rahmen 12 trägt an seinem oberen Ende eine zentrale Tragplatte 13, auf der konzentrisch zur Drehachse und parallel zu dieser in gleichen Abständen Gleitstäbe 14 befestigt sind, die insgesamt einen Stützdorn 15 bilden.

An einem Gleitstab 14 ist ein Träger für den Motor 18 befestigt, auf dessen Welle ein Kreismesser 20 befestigt ist, das zwischen zwei Gleitstäben 14 des Stützdorns 15 die zu einem zylindrischen Folienschlauchabschnitt 21 aufgeweitete Folienschlauchbahn 3 auftrennt. Durch dieses Auftrennen wird eine Flachfolienbahn gebildet, in der die Verstreckungsrichtung entsprechend dem Aufschneidwinkel schräg verläuft. Diese Flachfolienbahn 21 wird durch ein unterhalb eines Durchtrittsschlitzes der Tragplatte 13 angeordnetes Vorzugswalzenpaar 22 über den Stützdorn 15, die Umlenkwalze 23 und die Wendestange 24 vorgezogen und fluchtend dem Wickelkern der Aufwickelvorrichtung 25 zugeführt und zu der Vorratsrolle 26 aufgewickelt. Die Aufwickeleinrichtung 25 ist in dem Rahmen 12 angeordnet und rotiert daher mit. Die Aufwickelvorrichtung ist mit einem nicht dargestellten, mitrotierenden Antrieb versehen. Die Wickelachse der Aufwickelvorrichtung 25 verläuft rechtwinkelig zu der Drehachse der Tragplatte 13 und schneidet diese. Zur Entnahme der fertig gewickelten Rolle 26 ist die Wickelvorrichtung 25 mit ausschwenkbaren, die Wickelachse oder den Wickelkern tragenden Trägern 28 versehen, die schwenkbar auf der einen Drehtisch bildenden Grundplatte 29 des Rahmens 12 gelagert sind.

Auf der Tragplatte ist ein zentrales Blasluftrohr 30 befestigt, dessen Achse mit der Drehachse des Rahmens 12 bzw. des Stützdorns 15 fluchtet. Das Blasluftrohr 30 weist an seinem unteren Ende einen Anschlußstutzen auf, in den der Auslaß des von dem Motor 31 angetriebenen Gebläses 32 mündet, das ebenfalls auf der Tragplatte 13 befestigt ist.

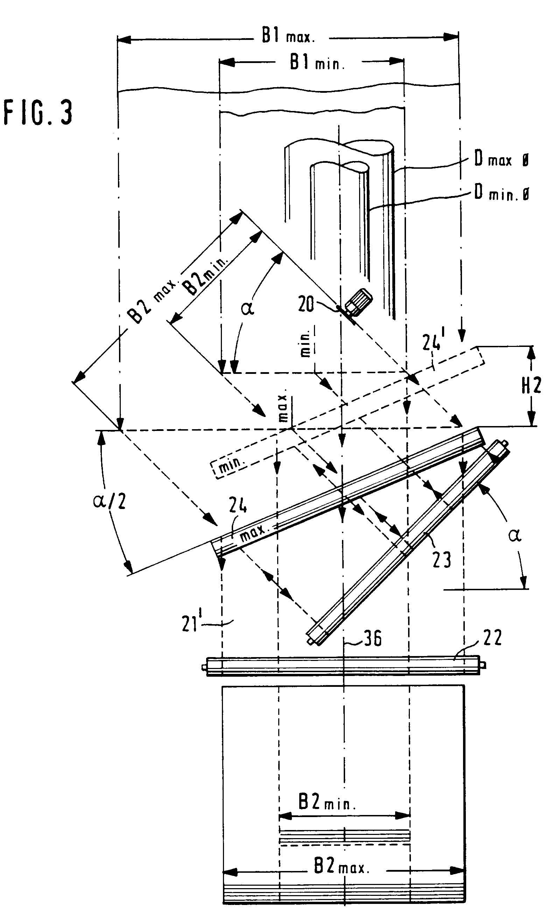

Fig. 3 zeigt eine vergrößerte Draufsicht auf die Umlenkwalze 23 und die Wendestange 24 in Richtung der Pfeile III in Fig. 1 in schematisierter Darstellung. In Fig. 3 bedeutet die Breite B1max den Umfang des breitesten zu verarbeitenden Folienschlauches, also die Breite der Flachfolienbahn, die sich bei dessen Aufschneiden in axialer Richtung ergibt. Entsprechend bedeutet B2min die Breite des Flachfolienschlauches, die sich ergibt, wenn der kleinste Folienschlauch mit dem Durchmesser Dmin in axialer Richtung aufgeschnitten wird.

Da das Trennmesser 20 um den Winkel α spitzwinkelig zur Schlauchfolienachse angestellt ist, ergeben sich bei dem Aufschneiden von Folienschläuchen mit größtem und kleinstem Durchmesser Flachbahnen mit entsprechend geringerer Breite B2max und B2min.

Die von dem Trennmesser 20 ablaufende Flachfolienbahn läuft zunächst über die Umlenkwalze 23, die um den Schnittwinkel α zur Drehachse 36 geneigt ist. Von der Umlenkwalze 23 läuft die Flachfolienbahn über die Wendestange 24 zu dem Vorzugswalzenpaar 22.

Eine gerade Zuführung der Flachfolienbahn 21 zu dem Vorzugswalzenpaar 22 wird dadurch erreicht, daß die Wendestange 24 nur um den Winkel /2 zu der Drehachse 36 geneigt ist.

Wie aus Fig. 3 ersichtlich ist, muß bei einer Änderung des Schlauchfoliendurchmessers von Dmax auf Dmin die Wendestange 24 um die Strecke H2 in axialer Richtung verfahren werden. Daneben müssen selbstverständlich auch die Umlenkwalze 23 und die Wendestange 24 entsprechend der Durchmesseränderung des Stützdorns 15 in radialer Richtung verfahren werden.

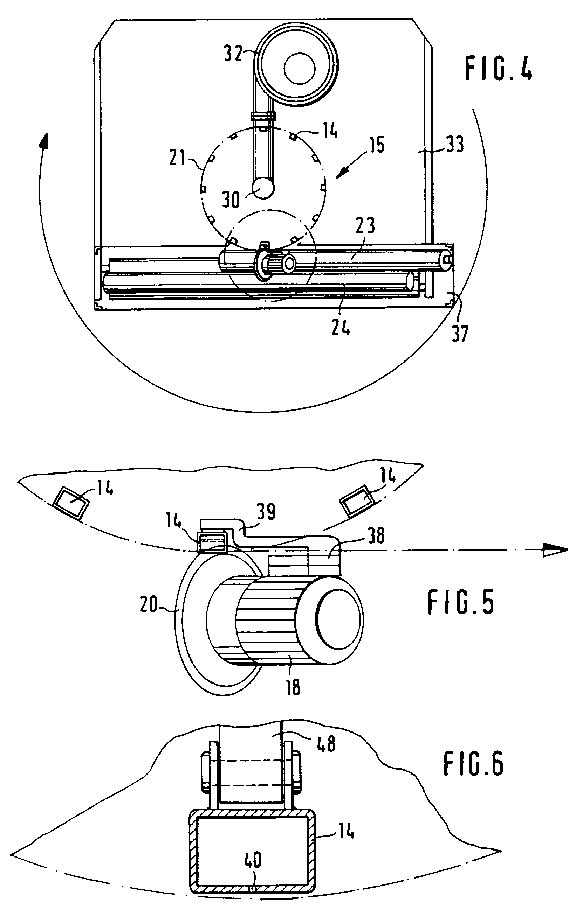

Die Draufsicht gemäß Fig. 4 zeigt die radiale Stellung der Umlenkwalze 23 und der Wendestange 24 relativ zu dem Stützdorn 15. Die Umlenkwalze 23 und die Wendestange 24 sind in einem Rahmen 37 gelagert, der relativ zu dem Stützdorn 15 in radialer Richtung auf der Tragplatte 33 verfahrbar geführt ist.

Die Befestigung des Trägers 38 des Motors 18 des Schneidmessers 20 ist in vergrößerter Darstellung aus Fig. 5 ersichtlich. Der Träger 38 ist durch einen abgekröpften Bügel 39 durch eine Manschette an einem Gleitstab 14 befestigt. Die Manschette ist, falls erforderlich, entsprechend der Durchmesseränderung des Stützdorns 15 höhenverstellbar und auf dem Gleitstab 14 festklemmbar.

Die Gleitstäbe 14 bestehen, wie aus Fig. 6 ersichtlich, aus Kastenprofilen und sind in ihrem Inneren durch Druckluft beaufschlagt und weisen an ihren äußeren Stirnflächen Bohrungen 40 auf, die der Reibungsverminderung dienende Blasluftdüsen bilden.

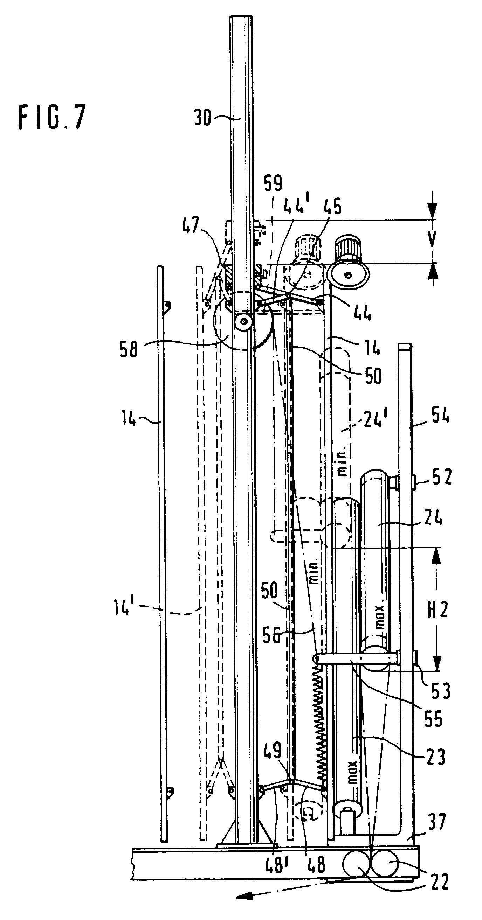

In Fig. 7 ist die radial äußerste Stellung der Gleitstäbe 14 mit voll ausgezogenen Linien und die radial innerste Stellung der Gleitstäbe mit gestrichelten Linien 14' dargestellt. Zur Verstellung der Gleitstäbe 14 zwischen der inneren und äußeren Stellung sind durch ein Kniegelenk 45 miteinander kniehebelartig verbundene Lenker 44, 44' vorgesehen, deren äußere Enden einerseits im oberen Bereich der Gleitstäbe 14 an diesen und deren inneren Enden an dem zentralen Blasluftrohr 30 angelenkt sind. Der Lenker 44 ist über das Kniehebelgelenk 45 hinaus verlängert und mit seinem inneren Ende an einem Schiebering 47 angelenkt. Die unteren Bereiche der Gleitstäbe 14 sind in entsprechender Weise durch kniehebelartig miteinander verbundene Lenker 48, 48' mit dem zentralen Blasluftrohr 30 gelenkig verbunden. Darüber hinaus ist das untere Kniegelenk 49 durch eine Koppelstange 50 mit dem oberen Kniegelenk 45 gelenkig verbunden. Durch diese Ausgestaltung wird ein Verschiebemechanismus geschaffen, der eine Verstellung der Gleitstäbe 14 in radailer Richtung zu dem Blasluftrohr 30 nur durch axiale Verschiebung des Schieberinges 47 gestattet, der in der gewünschten Stellung durch eine Klemmschraube auf dem Blasluftrohr 30 festgeklemmt wird.

Entsprechend der radialen Verstellung der Gleitstäbe 14 muß auch die Wendestange 24 in ihrer Höhe verstellt werden. Hierzu ist die Wendestange 24 durch Gleitbuchsen 52, 53 auf vertikalen Streben 54 des Rahmens 37 in axialer Richtung verschieblich geführt. Zur Verschiebung sind die Gleitbuchsen mit einem Hebel 55 verbunden, der durch ein Seil 56 angehoben und abgesenkt werden kann. Das Seil 56 ist auf eine Seiltrommel 58 aufgewickelt, die auf einer horizontalen Achse drehbar gelagert ist, die an dem zentralen Blasluftrohr 30 befestigt ist. Zum Antrieb der Seiltrommel 58 ist diese mit einem Zahnrad versehen, das mit einer Zahnstange 59 kämmt, die mit einem Gleitstab 14 verbunden ist. Dabei ist der Verstellmechanismus so ausgelegt, daß bei einer Verstellung der Gleitstäbe von der äußersten auf die innerste Stellung 14' die Wendestange 24 aus der in vollen Linien dargestellten Stellung in die in gestrichelten Linien dargestellte Stellung 24' um die Strecke H2 angehoben wird.

Das nach innen ragende Ende des Hebels 56 ist durch eine Zugfeder mit dem Anlenkbereich des Lenkers 48 an dem Gleitstab 14 verbunden, die die Wendestange 24 in ihre untere Stellung zu ziehen trachtet.

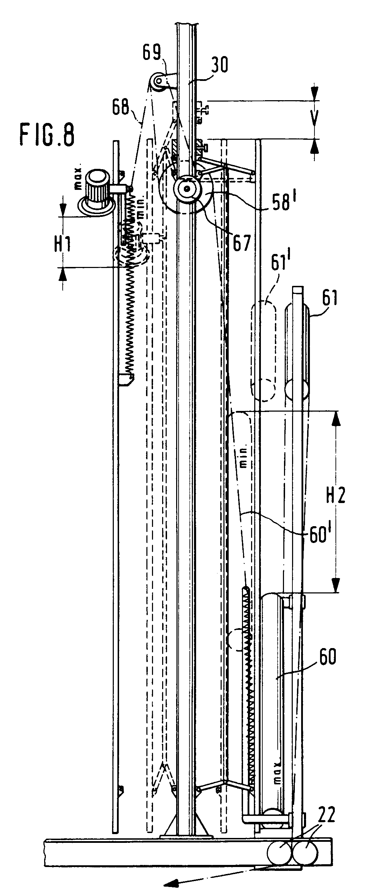

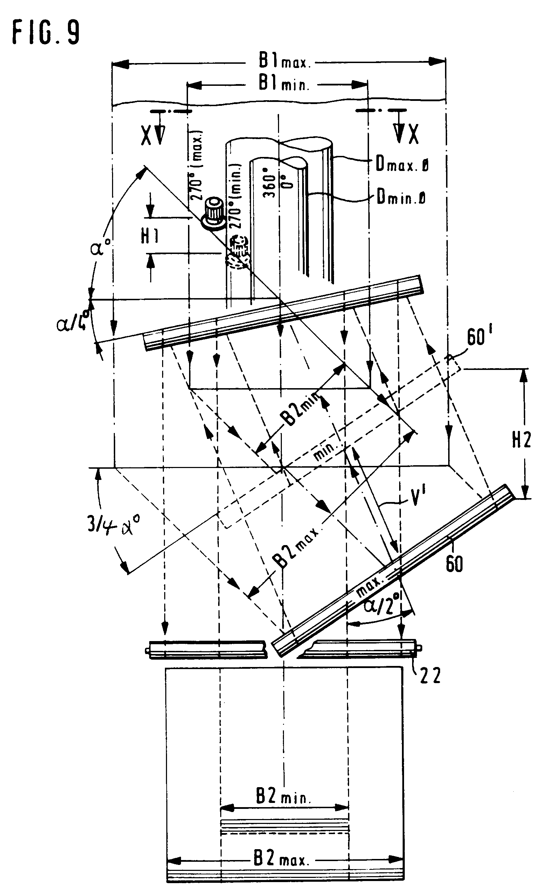

In Fig. 8 ist eine Ausführungsform mit zwei Wendestangen 60, 61 dargestellt. Bei einer Verstellung der Gleitstäbe 14 von ihrer äußersten auf ihre innerste Stellung muß die untere Wendestange 60 neben ihrer radialen Verschiebung in axialer Richtung um die Strecke H2 in die gestrichelte Stellung 60' angehoben werden, wie dies besonders deutlich aus Fig. 9 ersichtlich ist, die eine Draufsicht auf die Wendestangenanordnung nach Fig. 8 zeigt. Aus Fig. 9 ist in einer der Fig. 3 entsprechenden Weise ebenfalls ersichtlich, wie die Verhältnisse sich bei einer Umstellung von dem größtmöglichen auf den kleinstmöglichen Schlauchdurchmesser ändern.

Auch bei der Ausführungsform nach Fig. 8 ist eine Zugfeder vorgesehen, die bestrebt ist, die Wendestange 60 in ihrer unteren Stellung zu halten.

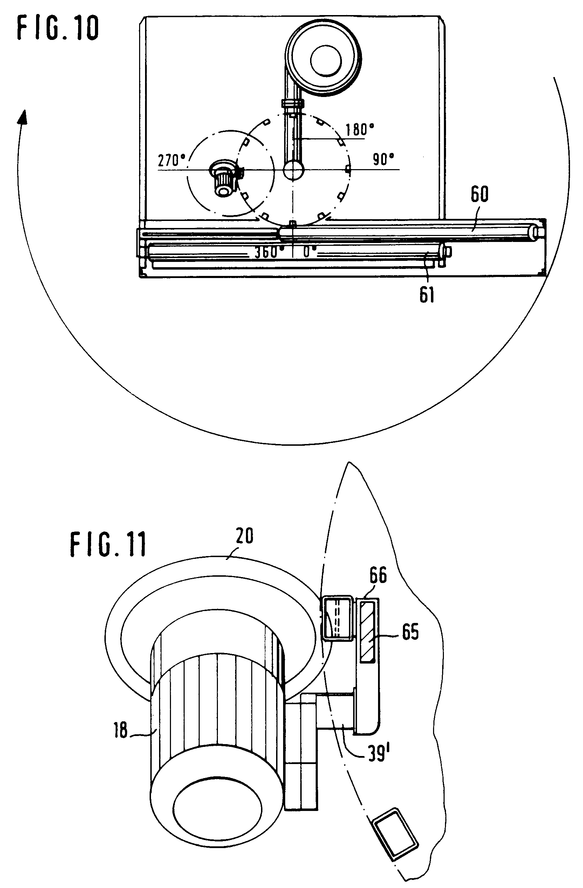

Fig. 10 zeigt eine Draufsicht auf die Ausführungsform nach Fig. 8. Da bei der Ausführungsform nach Fig. 8 auch das Kreismesser 20 in axialer Richtung verschieblich angeordnet sein muß, ist zusätzlich ein Führungsprofil 65 vorgesehen, das der Träger 39' der Tragplatte des Motors 18 mit einer Gleitbuchse 66 umfaßt. Zur Höhenverstellung des Motors ist die Seiltrommel 58' achsgleich mit einer kleineren Seiltrommel 67 versehen, auf die ein die Schneidvorrichtung 18, 20 hebendes und absenkendes Seil 68 aufgewickelt ist, das über eine Umlenkrolle 69 läuft, die an dem zentralen Blasluftrohr 30 frei drehbar gelagert ist.

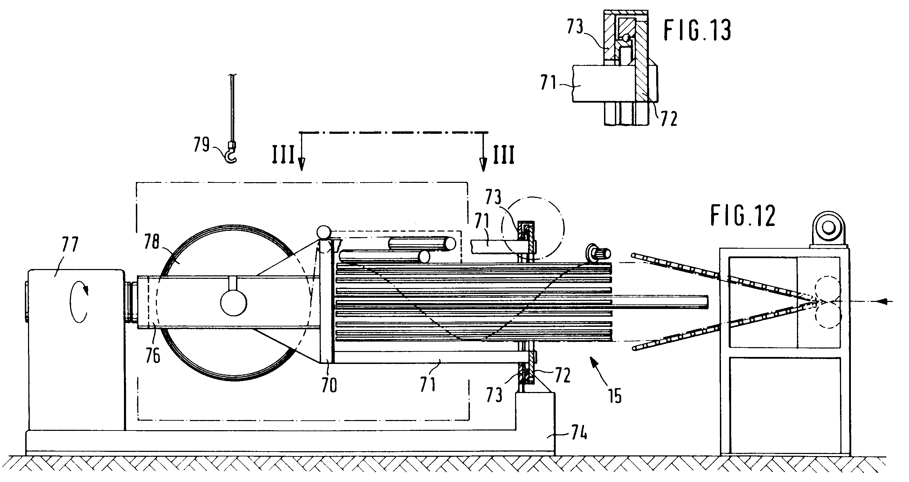

Bei der Ausführungsform nach Fig. 12 ist die zentrale Tragplatte 70 um eine horizontale Achse drehbar gelagert, so daß die ganze Vorrichtung eine liegende Anordnung hat. Mit der Tragplatte 70 sind achsparallele Träger 71 verbunden, die den aus den Gleitstäben gebildeten Stützdorn 15 gleichsam käfigförmig einfassen. An ihren äußeren Enden sind die Träger 71 mit einem Ring 72 verbunden, der über ein Kugellager auf einem Ring 73 gelagert ist, der fest mit dem Maschinengestell 74 verbunden ist.

Auf ihrer Rückseite ist die Tragplatte mit einem Träger 76 verbunden, der endseitig einen Zapfen aufweist, der in dem Gestell 77 drehbar gelagert und über einen Getriebemotor angetrieben ist. In dem Rahmen 76 ist die Aufwickeleinrichtung mit Antriebseinheit gelagert. Die fertige Wickelrolle 78 aus Flachfolie kann nach entsprechender Ausrichtung durch den Kran 79 ausgehoben werden.

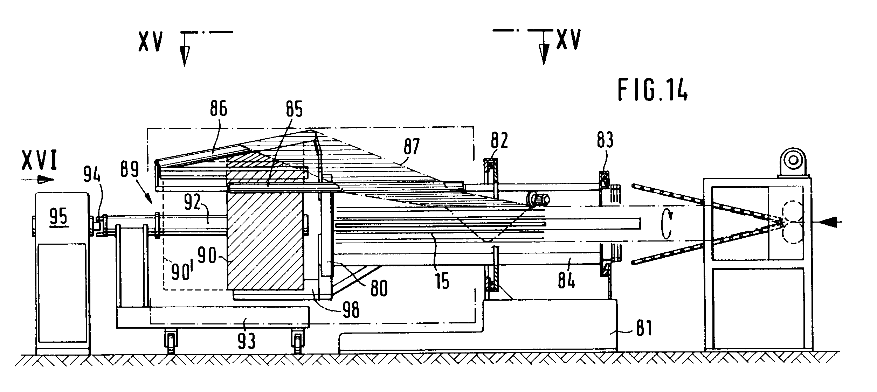

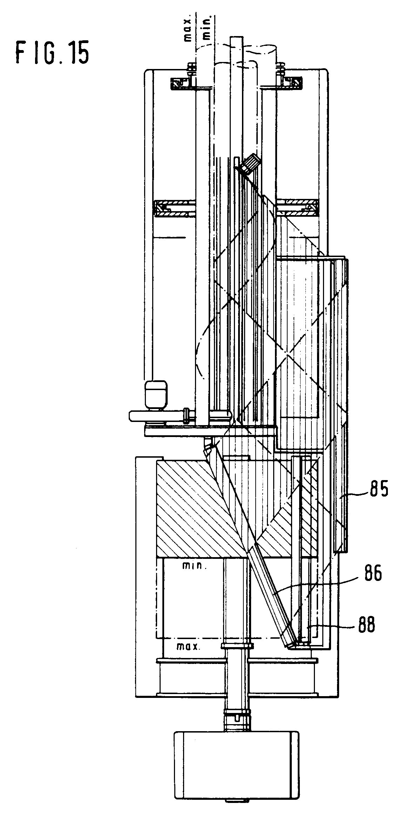

Bei der Ausführungsform nach Fig. 14 ist der Stützdorn 15 mit endseitiger Tragplatte 80 nach hinten frei auskragend fliegend in dem Maschinengestell 81 durch zwei Ringanordnungen 82, 83 gelagert, wobei die jeweiligen Innenringe an käfigförmigen Trägern 84 befestigt sind, die mit der Tragplatte 80 verbunden sind. Der Innenring der Ringanordnung 82 ist mit einer nicht dargestellten Verzahnung versehen, mit der zum Antrieb des Stützdorns 15 und der Tragplatte 80 ein von einem Motor angetriebenes Ritzel kämmt. Mit der Tragplatte 80 sind diese nach hinten überragende Wendestangen 85, 86 verbunden, über die die durch wendelförmiges Aufschneiden des Folienschlauches gebildete Flachbahn 87 über das Vorzugsrollenpaar 88 auf die Wickeleinrichtung 89 läuft und zu der Wickelrolle 90 aufgewickelt wird. Aus den Fig. 14 und 15 ist das wendelförmige Aufschneiden einer Schlauchfolienbahn mit kleinstem Durchmesser ersichtlich. Wird eine Schlauchfolienbahn mit größtem Durchmesser aufgeschnitten, erreicht die Wickelrolle die durch gestrichelte Linien 90' eingezeichnete Breite.

Die Wickelwelle 92 ist fliegend in einem Wagen 93 gelagert, wobei der Zapfen der Wickelwelle durch eine lösbare Kupplung 94 mit dem Abtriebszapfen eines Motors oder Getriebemotors verbindbar ist, der in dem Ständer 95 angeordnet ist. Nach Lösen der Kupplungsverbindung 94 läßt sich der Wagen quer aus der Vorrichtung zur Entnahme der Wickelrolle herausfahren.

Bei der Ausführungsform nach den Fig. 14 und 15 fluchtet die Achse der Wickelwelle 92 mit der Drehachse des Stützdorns 15, so daß die Wickelwelle nur die Aufwickelbewegung zu vollziehen braucht und nicht zusätzlich noch um eine Querachse mitrotieren muß.

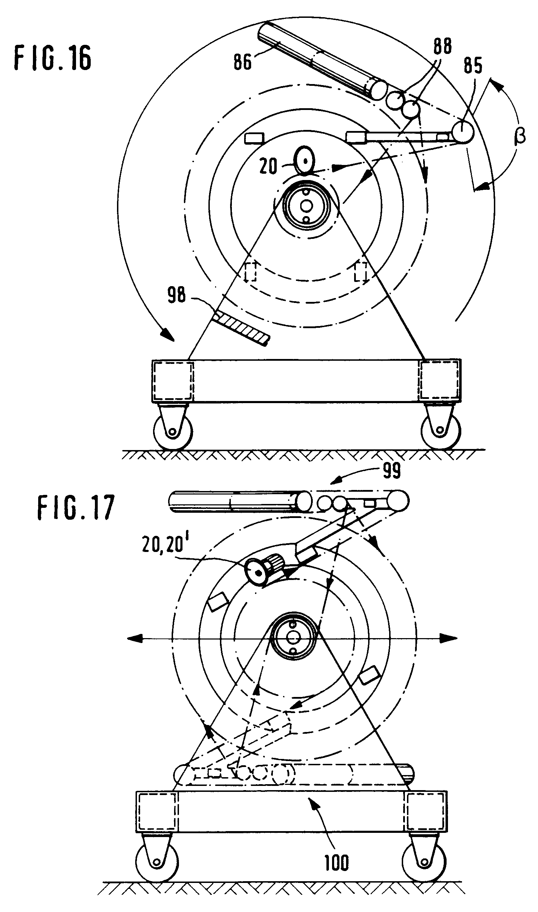

Aus Fig. 16 ist ersichtlich, wie die von dem Trennmesser 20 ablaufende Folienbahn über die erste Wendestange 85, die zweite Wendestange 86 und das Vorzugsrollenpaar 88 auf den Wickelkern bzw. die sich bildende Vorratsrolle aufläuft. Der Drehtisch ist gegenüberliegend zu der Wendestangenanordnung mit einem Gegengewicht 98 versehen, das eine durch die Wendestangenanordnung verursachte Unwucht ausgleicht.

Bei dem Ausführungsbeispiel nach Fig. 17 sind zwei in axialer Richtung hintereinanderliegende Trennmesser 20, 20' vorgesehen, durch die von der Schlauchfolienbahn zwei zueinander parallele Flachfolienbahnen abgetrennt werden. Die erste Flachfolienbahn läuft über die Wendestangen-Vorzugsrollenanordnung 99 auf ihren Wickelkern und die zweite über die Wendestangen-Vorzugsrollenanordnung 100 auf die zweite Wickeleinrichtung, deren Wickelachse fluchtend zu der Wickelachse der ersten Aufwickelvorrichtung angeordnet ist. Beide Wickelachsen fluchten mit der Drehachse des Stützdorns 15.

## Patentansprüche

1. Vorrichtung zum Aufweiten einer Folienschlauchbahn (3) aus thermoplastischem Kunststoff
mit einem in einem Maschinengestell (8, 11, 81) gelagerten Vorzugsrollenpaar (7) für eine flachliegende Folienschlauchbahn (3) und
mit einer Einrichtung zum zylindrischen Aufweiten des Abschnitts der kontinuierlich vorgezogenen Schlauchfolienbahn (3), die ein einen Stützdorn (15) überragendes Blasluftrohr aufweist,
**dadurch gekennzeichnet,**
daß zur Aufweitung der Folienschlauchbahn (3) im Gestell (8, 11, 81) symmetrisch zur Mittelebene des Walzenspaltes des Vorzugswalzenpaares (7) keilförmig Stützplatten (9, 10) angeordnet sind, die zum Walzenspalt hin konvergieren, und daß auf einer Tragplatte (13) o. dgl. das Blasluftrohr (30) befestigt ist, das diesen einfassende Gleitstäbe (14) eines Stützdorns (15) vorzugsweise überragt und das mit einem auf der Tragplatte (13) angeordneten Gebläse (31) verbunden ist.

2. Vorrichtung nach Anspruch 1, dadurch gekennzeichnet, daß die Achse des Blasluftrohres (30) mit der Drehachse des Trägers (13, 18) fluchtet.

## Claims

1. Apparatus for opening up a tubular film web (3) of thermoplastic material, having a pair of drawing-forward rollers (7) which are mounted in a machine framework (8, 11, 81) and are intended for a flattened tubular film web (3), and having a device for cylindrically opening up the section of continuously drawn-forward tubular film web (3), which device has a blowing-air pipe extending beyond a supporting mandrel (15), characterized in that for the opening up of the tubular film web (3) there are arranged in the framework (8, 11, 81) in a wedge form, symmetrically with respect to the centre plane of the roller nip of the pair of drawing-forward rollers (7), supporting plates (9, 10) which converge towards the roller nip; and in that the blowing-air pipe (30) is fastened on a carrying plate (13) or the like, preferably extends beyond sliding rods (14) of a supporting mandrel (15) which enclose it, and is connected to a blower (31) arranged on the carrying plate (13).

2. Apparatus according to Claim 1, characterized in that the axis of the blowing-air pipe (30) is in line with the axis of rotation of the carrier (13, 18).

## Revendications

1. Dispositif pour ouvrir une bande de film tubulaire (3) en une matière synthétique thermoplastique, avec une paire de rouleaux de traction (7) logés dans un châssis de machine (8, 11, 81) pour une bande de film tubulaire (3) reposant à plat et avec un dispositif pour un élargissement cylindrique du tronçon de la bande de film tubulaire (3) tirée continuellement vers l'avant, qui présente un tuyau d'air de soufflage faisant saillie sur un mandrin d'appui (15), caractérisé en ce que sont prévues pour élargir la bande de film tubulaire (3) dans le châssis (8, 11, 81), de façon symétrique au plan médian de la fente entre les rouleaux d'une paire de rouleaux de traction (7), en forme de coin des plaques d'appui (9, 10) qui convergent vers la fente entre les rouleaux, et en ce qu'il est fixé sur une plaque de support (13) ou analogue le tuyau d'air de soufflage (30) qui fait saillie de préférence sur des tiges de coulissement (14) entourant celui-ci d'un mandrin d'appui (15) et qui est relié à une soufflerie (31) disposée sur la plaque de support (13).

2. Dispositif selon la revendication 1, caractérisé en ce que l'axe du tuyau d'air de soufflage (30) est aligné avec l'axe de rotation du support (13, 18).
